(19) Europäisches Patentamt
European Patent Office
Office européen des brevets

(11) **EP 4 250 180 A1**

(12) **EUROPEAN PATENT APPLICATION**

(43) Date of publication:
**27.09.2023  Bulletin 2023/39**

(21) Application number: **23161861.2**

(22) Date of filing: **14.03.2023**

(51) International Patent Classification (IPC):
**G06N 3/045** (2023.01)    **G06N 3/082** (2023.01)
**G06N 3/09** (2023.01)    **G06N 3/0985** (2023.01)

(52) Cooperative Patent Classification (CPC):
**G06N 3/082; G06N 3/045; G06N 3/09;
G06N 3/0985;** G06N 3/0464

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **21.03.2022   CN 202210278192**

(71) Applicant: **Beijing Tusen Zhitu Technology Co.,
Ltd.
Beijing 100016 (CN)**

(72) Inventors:
• **YUAN, Liuchun**
  **Beijing, 100016 (CN)**
• **HUANG, Zehao**
  **Beijing, 100016 (CN)**
• **WANG, Naiyan**
  **Beijing, 100016 (CN)**

(74) Representative: **Murgitroyd & Company
Murgitroyd House
165-169 Scotland Street
Glasgow G5 8PL (GB)**

(54)    **METHOD AND APPARATUS FOR GENERATING NEURAL NETWORK**

(57)    The present disclosure relates to a method and an apparatus for generating a neural network. The method for generating a neural network according to the present disclosure includes: training a plurality of neural networks for a plurality of performance parameters to obtain a plurality of parameter values for each performance parameter; training a plurality of neural network predictors based on the parameter values and the neural networks; and determining a target neural network using trained neural network predictors. According to the technique for generating a neural network herein, automatic searching for a network structure satisfying a preset constraint is enabled in a search space of network structures.

100

FIG. 1A

EP 4 250 180 A1

**Description**

**CROSS-REFERENCE TO RELATED APPLICATIONS**

The present disclosure claims priority to Chinese Patent Application No. 202210278192.7, titled "METHOD AND APPARATUS FOR GENERATING NEURAL NETWORK", filed on March 21, 2022.

**TECHNICAL FIELD**

The present disclosure relates generally to the technical field of neural networks and, more particularly, to a method and an apparatus for generating a neural network.

**BACKGROUND**

In recent years, with the rapid development of deep learning, higher requirements have been put forward for the performance parameters of neural networks such as accuracy, number of parameters, and running speed. However, artificial designing of neural networks requires the expertise of designers, and a large number of experiments are also necessary to verify the performance of neural networks. Therefore, automatic designing of efficient neural networks has attracted attention in recent years, and neural architecture search (NAS) has been increasingly favored for its high performance, deep automation, and other advantages.

Typically, NAS needs to sample and train candidate network structures in a search space, evaluate the candidate network structures in terms of a single performance parameter, and determine a target neural network in terms of the single performance parameter according to obtained data. This fails to implement searching under constraints.

**SUMMARY**

The present disclosure presents a technique for generating a neural network that can enable searching under constraints.

A summary of the disclosure is given below to provide a basic understanding of some aspects of the disclosure. It should be understood that this summary is neither an exhaustive overview of the disclosure, nor intended to identify key or critical elements of the disclosure or define the scope of the disclosure. It is intended solely to present some concepts in a simplified form as a prelude to the more detailed description that follows.

According to an aspect of the present disclosure, a method for generating a neural network is provided, including: training a plurality of neural networks for a plurality of performance parameters to obtain a plurality of parameter values for each performance parameter; training a plurality of neural network predictors based on the parameter values and the neural networks; and determining a target neural network using the trained neural network predictors.

According to another aspect of the present disclosure, an apparatus for generating a neural network is provided, including: a first training unit configured to train a plurality of neural networks for a plurality of performance parameters to obtain a plurality of parameter values for each performance parameter; a second training unit configured to train a plurality of neural network predictors based on the parameter values and the neural networks; and a determination unit configured to determine a target neural network using the trained neural network predictors.

According to another aspect of the present disclosure, a computer program for enabling the above method for generating a neural network is provided. Furthermore, a computer program product in the form of at least a computer-readable medium recording computer program codes for implementing the above method for generating a neural network is provided.

According to another aspect of the present disclosure, an electronic device is provided, including a processor and a memory, wherein the memory stores a program which, when executed by the processor, causes the processor to perform the above method for generating a neural network.

According to another aspect of the present disclosure, a data processing method is provided, including: receiving data; and processing the data using the target neural network determined according to the above method for generating a neural network to achieve at least one of data classification, semantic segmentation, and target detection.

According to the technique for generating a neural network herein, a plurality of neural network predictors may be trained to determine a target neural network, and one or more of the plurality of neural network predictors may represent a constraint (the one or more neural network predictors representing a constraint are also referred to as auxiliary predictors), thereby enabling an automatic search for a network structure satisfying a preset constraint in a search space of network structures.

## BRIEF DESCRIPTION OF THE DRAWINGS

The above and other objects, features and advantages of the present disclosure will be more readily understood by reference to the following description of embodiments of the disclosure taken in conjunction with the accompanying drawings, in which:

FIG. 1A is a flowchart illustrating a method for generating a neural network according to an embodiment of the present disclosure;

FIG. 1B is another implementation illustrating a step in the method for generating a neural network according to an embodiment of the present disclosure;

FIG. 2 is a schematic diagram illustrating the method for generating a neural network according to an embodiment of the present disclosure;

FIG. 3 is a schematic diagram illustrating an example of a network structure represented by a directed acyclic graph according to an embodiment of the present disclosure;

FIG. 4 is a block diagram illustrating an apparatus for generating a neural network according to an embodiment of the present disclosure; and

FIG. 5 is a block diagram illustrating a general-purpose machine that may be used to implement the method and the apparatus for generating a neural network according to embodiments of the present disclosure.

## DETAILED DESCRIPTION

Hereinafter, some embodiments of the present disclosure will be described in detail with reference to the accompanying illustrative drawings. When reference is made to an element of a drawing, while the element is shown in different drawings, the element will be referred to by the same reference numerals. Furthermore, in the following description of the present disclosure, a detailed description of known functions and configurations incorporated herein will be omitted to avoid rendering the subject matter of the present disclosure unclear.

The terminology used herein is for the purpose of describing particular embodiments only and is not intended to limit this disclosure. As used herein, the singular forms of terms are intended to include the plural forms as well, unless the context indicates otherwise. It will be further understood that the terms "comprise", "include", and "have" herein are taken to specify the presence of stated features, entities, operations, and/or components, but do not preclude the presence or addition of one or more other features, entities, operations, and/or components.

Unless otherwise defined, all the terms including technical and scientific terms herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

In the following description, numerous specific details are set forth to provide a thorough understanding of the present disclosure. The present disclosure may be implemented without some or all of these specific details. In other instances, to avoid obscuring the disclosure by unnecessary detail, only features that are germane to aspects according to the disclosure are shown in the drawings, and other details that are not germane to the disclosure are omitted.

Hereinafter, a technique for generating a neural network according to the present disclosure will be described in detail in conjunction with embodiments of the present disclosure with reference to the accompanying drawings.

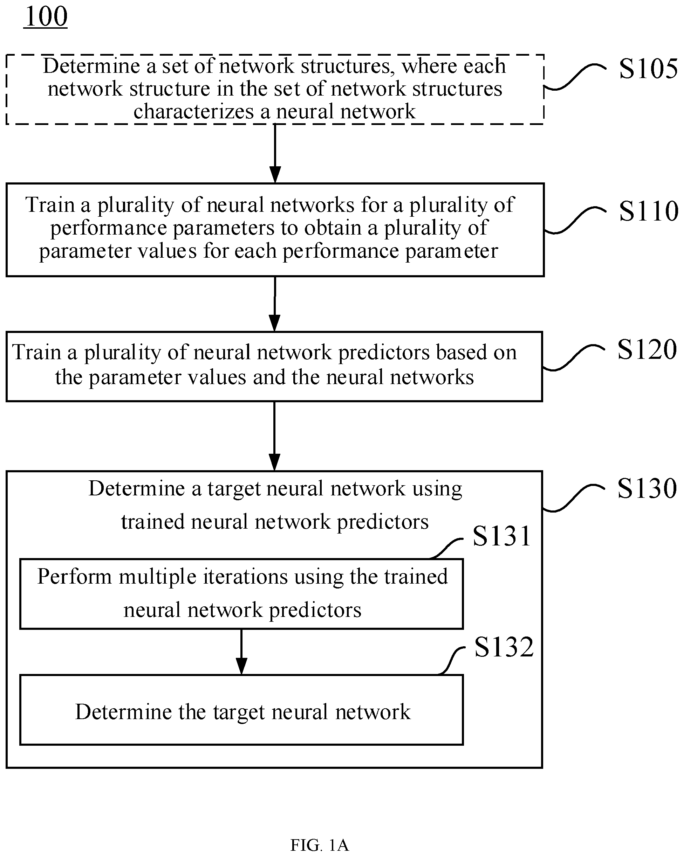

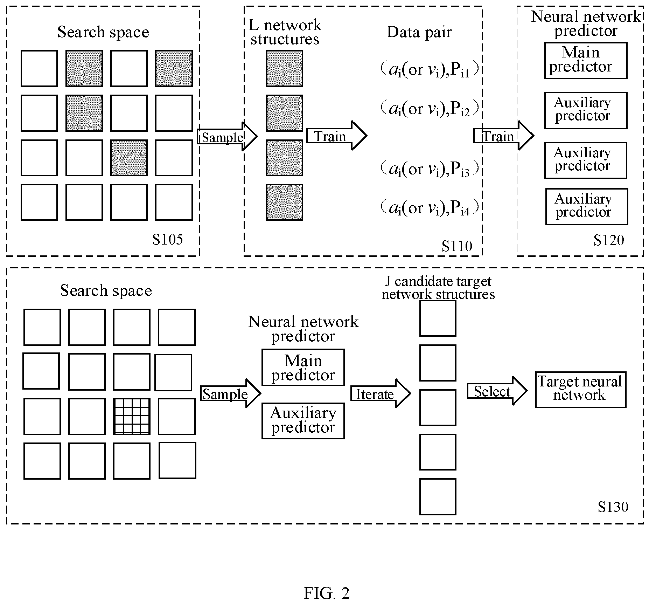

FIG. 1A is a flowchart illustrating a method 100 for generating a neural network according to an embodiment of the present disclosure. FIG. 2 is a schematic diagram illustrating the method 100 for generating a neural network according to an embodiment of the present disclosure.

According to an embodiment of the present disclosure, the method 100 may include:

step S 110, training a plurality of neural networks for a plurality of performance parameters to obtain a plurality of parameter values for each performance parameter;

step S 120, training a plurality of neural network predictors based on the parameter values and the neural networks; and

step S 130, determining a target neural network using the trained neural network predictors.

According to an embodiment of the present disclosure, the method 100 may optionally include step S 105 of determining a set of network structures, where each network structure in the set of network structures characterizes a neural network, as indicated in a dashed box.

A neural network, also known as an artificial neural network (ANN) is an algorithm mathematical model for distributed parallel information processing that imitates behavior characteristics of animal neural networks. Such a network relies on the complexity of a system and enables the processing of information by adjusting the interconnection of a large number of internal nodes. Since neural networks and their network structures are known to those skilled in the art, the details of neural networks and their network structures are not described in more detail herein for the sake of brevity. Furthermore, in the context herein, "neural network structure" and "network structure" are the terms that have the same meaning, both for characterizing a neural network and are therefore used interchangeably in the description.

Steps S105, S 110, S120, and S130 of the method 100 are described in more detail below in connection with FIG. 2.

According to an embodiment of the present disclosure, in step S 105 of the method 100, the set of network structures is determined. The set of network structures may also be referred to as a search space of network structures. Each network structure in the set of network structures contains information such as a depth, width and/or size of a convolution kernel of the neural network to which the network structure corresponds (also referred to as the neural network characterized by the network structure), and thus selecting a network structure is equivalent to selecting the neural network to which the network structure corresponds.

According to an embodiment of the present disclosure, the network structure in the set of network structures may be a network structure based on a network topology and/or a network structure based on a network size. Accordingly, the set of network structures may include a subset of network structures based on the network topology and/or a subset of network structures based on the network size.

According to an embodiment of the present disclosure, the network structures based on the network topology may include, for example, a network structure represented by a directed acyclic graph (DAG). The directed acyclic graph refers to a directed graph in which no loops exist. In other words, a directed graph is a directed acyclic graph if a path cannot start from a node and go back to the same node through several edges. Since directed acyclic graphs are known to those skilled in the art, the details of directed acyclic graphs are not described in more detail herein for the sake of brevity.

According to an embodiment of the present disclosure, nodes of the directed acyclic graph may represent different types of operations of a neural network, and one node may represent one operation. An edge of the directed acyclic graph may represent a connection relationship between nodes of the directed acyclic graph. One edge typically corresponds to two nodes (e.g., the two nodes connected by the edge) to represent a connection relationship between the two nodes.

According to an embodiment of the present disclosure, each operation represented by a node in the directed acyclic graph may be one of inputting, convolution, pooling, reduce-summing, skipping, zeroizing, and outputting. Herein, the convolution can include group convolution, separable convolution, or dilated convolution; the pooling may include max pooling or average pooling; the reduce-summing may include addition along a channel dimension or a spatial dimension. Furthermore, according to an embodiment of the present disclosure, the size of the convolution (i.e., the size of the convolution kernel) and the size of the pooling may be set for a particular target task.

According to an embodiment of the present disclosure, the edge in the directed acyclic graph may be directed to indicate an order of execution of the operations represented by the corresponding two nodes.

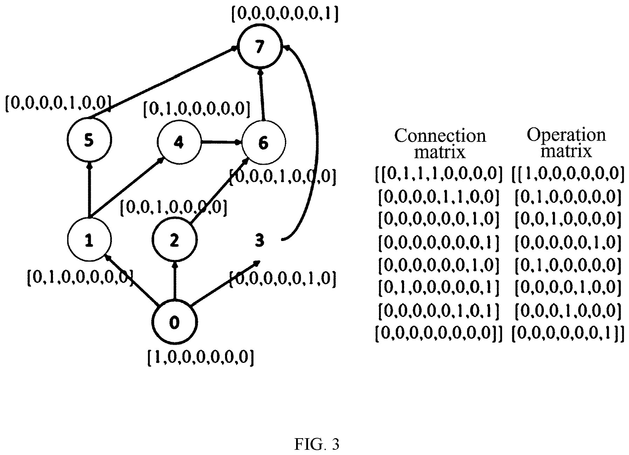

FIG. 3 is a schematic diagram illustrating an example of a network structure represented by a directed acyclic graph according to an embodiment of the present disclosure;

The directed acyclic graph shown in FIG. 3 includes eight nodes, numbered 0 through 7, respectively. As described above, the operations represented by nodes 0 through 7 are selected from a set of operations, i.e., {inputting, $1 \times 1$ convolution, $3 \times 3$ convolution, $3 \times 3$ pooling, skipping, zeroizing, outputting}. It should be noted that in the above set, zeroizing means a null operation, i.e., an operation without any actual action where the input of the operation is identical to the output of the operation. In the above set, skipping indicates a disconnection operation, that is, the skipping operation indicates that a node before and a node after the skipping operation are in a disconnected state. With the skipping and zeroizing operations included in the set of operations, some network structures in the set of network structures may be made to have similar structures, thereby reducing computational complexity. For example, the number of nodes and the connection relationship between the nodes may be the same for some network structures (i.e., the connection matrices are the same for these network structures), while the operations represented by the nodes are changed (i.e., the operation matrices are different for these network structures), thereby simplifying the computation. Those skilled in the art will appreciate that the skipping and zeroizing operations in the above set of operations may be omitted regardless of the consumption of computational resources.

As shown in FIG. 3, a node 0 corresponds to an inputting operation, nodes 1 and 4 correspond to convolution operations with a 1×1 convolution kernel, a node 2 corresponds to a convolution operation with a 3×3 convolution kernel, a node 3 corresponds to the zeroizing operation, a node 5 corresponds to the skipping operation, a node 6 corresponds to a 3×3 pooling operation, which may be, for example, an average pooling operation, and a node 7 corresponds to an outputting operation. Furthermore, as shown in FIG. 3, directed edges from the node 0 to the node 7 may represent connection relationships between nodes, from which an order of execution of operations represented by the nodes may be known.

As described above, the skipping and zeroizing operations may be omitted regardless of the consumption of computational resources. In the example of FIG. 3, the node 3 corresponds to the zeroizing operation so that the output of node 0, without any processing at the node 3, is sent directly to the node 7 as input to the node 7. Thus, in the example of FIG. 3, the node 3 may be omitted, and a directed edge from the node 0 to the node 7 is used instead, without changing the network structure represented by the directed acyclic graph. In the example of FIG. 3, the node 5 corresponds to the skipping operation so that the node 5 may be omitted, and the directed edge from the node 1 to the node 5 and the directed edge from node 5 to the node 7 may also be omitted, without changing the network structure represented by the directed acyclic graph.

According to an embodiment of the present disclosure, the operations represented by all the nodes may be encoded using one-hot codes to form an operation matrix representing the nodes of the directed acyclic graph. For the example shown in FIG. 3, each node may be represented as a one-dimensional vector through one-hot codes based on the set of operations, i.e., {inputting, 1×1 convolution, 3×3 convolution, 3×3 pooling, skipping, zeroizing, outputting}, of which the input is represented by [1000000], the 1×1 convolution (where 1×1 represents the size of the convolution kernel) is represented by [0100000], the 3×3 convolution (where 3×3 represents the size of the convolution kernel) is represented by [0010000], the zeroizing is represented by [0000010], the skipping is represented by [0000100], the 3×3 pooling (3×3 represents the size of the pooling) is represented by [0001000], and the output is represented by [0000001]. The operation matrix of the directed acyclic graph can be constructed by sequentially combining the one-dimensional vectors of the nodes. Those skilled in the art will recognize that the operations involved in the network structure characterizing the neural network are not limited to the operations described above in connection with FIG. 3.

Furthermore, according to an embodiment of the present disclosure, connection relationships between the nodes in the directed acyclic graph may be encoded to form a connection matrix representing the edges of the directed acyclic graph. In the example of FIG. 3, there are eight nodes, and each vector in the connection matrix may be represented by eight elements, where a value of each element indicates whether a node corresponding to the vector is connected to a node represented by the element. Specifically, a first element indicates whether the node corresponding to the vector is connected to the node 0, and the value of the element being 0 indicates that the node corresponding to the vector is not connected to the node 0, and 1 indicates that the node corresponding to the vector is connected to the node 0. A second element indicates whether the node corresponding to the vector is connected to the node 1, and the value of the element being 0 indicates that the node corresponding to the vector is not connected to the node 1, and 1 indicates that the node corresponding to the vector is connected to the node 1. A third element indicates whether the node corresponding to the vector is connected to the node 2, and the value of the element being 0 indicates that the node corresponding to the vector is not connected to the node 2, and 1 indicates that the node corresponding to the vector is connected to the node 2, and so on. Note that since the edges of the directed acyclic graph are directed edges, each element not only indicates whether the node corresponding to the vector is connected to the node represented by the element, but also indicates that the node represented by the element is located downstream of the node corresponding to the vector. For example, a first vector of the connection matrix in FIG. 3 is [01110000], and corresponds to the node 0, indicating whether the node 0 is connected to each node of the directed acyclic graph, and that the node connected thereto is located downstream of the node 0. The first element of the vector corresponds to the node 0, and has a value of 0, which indicates that the node 0 is not connected to itself. The second element of the vector corresponds to the node 1, and has a value of 1, which indicates that node 0 is connected to the node 1, and that the node 1 is located downstream of the node 0 (indicated by the directed edge from the node 0 to the node 1 in the directed acyclic graph of FIG. 3). The third element of the vector corresponds to the node 2, and has a value of 1, which indicates that the node 0 is connected to the node 2, and that the node 2 is located downstream of the node 0 (indicated by the directed edge from the node 0 to the node 2 in the directed acyclic graph of FIG. 3). The fourth element of the vector corresponds to node 3, and has a value of 1, which indicates that the node 0 is connected to the node 3, and that the node 3 is located downstream of the node 0 (indicated by the directed edge from the node 0 to the node 3 in the directed acyclic graph of FIG. 3). The fifth through eighth elements of the vector correspond to nodes 4 through 7, and have a value of 0, which indicates that the node 0 is not connected to the nodes 4 through 7.

The connection matrix and the operation matrix derived from the directed acyclic graph on the left side of FIG. 3 are shown on the right side. According to an embodiment of the present disclosure, the two matrices may represent the network structure of the neural network. Specifically, according to an embodiment of the present disclosure, the network structure based on the network topology may be expressed as a matrix $a=J\times O$, where $J \in \mathbb{R}^{N \mathrm{x} N}$ is a connection matrix defined according to the example described above, $O \in \mathbb{R}^{N \mathrm{x} M}$ is an operation matrix defined according to the example described above, N is the number of nodes, M is the number of operations (i.e., the number of operations included in a set of operations), and $\mathbb{R}$ is a symbol for the set of real numbers. For example, in the example of FIG. 3, the operations represented by the nodes are selected from the set of operations, i.e., {inputting, $1\times 1$ convolution, $3\times 3$ convolution, $3\times 3$ pooling, skipping, zeroizing, outputting}, and the number of operations in the set of operations is 7, thus M is 7; there are 8 nodes from node 0 to node 7, thus N is 8. According to an embodiment of the present disclosure, the network structure represented by the matrix $a$ may be updated by updating the matrix $a$.

Furthermore, according to an embodiment of the present disclosure, network structures based on the network size may include, for example, a network structure represented by a one-dimensional vector. In the case of the network structure represented by the one-dimensional vector, the topological structure of the network is not considered, and the size of the network is the only thing of interest, such as the width and depth of the network.

According to an embodiment of the present disclosure, a network structure based on the network size may be represented by a one-dimensional vector that may be constructed by concatenating numerical values representing the sizes of the neural network characterized by the network structure at different stages. For example, if the neural network characterized by the network structure has four stages, the width at each stage is 64, 128, 256, and 512 sequentially, and the depth at each stage is 4, 3, 3, and 4 sequentially, then the network structure can be represented by a one-dimensional vector, i.e., {64, 128, 256, 512, 4, 3, 3, 4}, constructed by concatenating the above values.

Thus, according to an embodiment of the present disclosure, a network structure based on the network size may be represented as a vector $v=[w_1, w_2, ... w_S, d_1, d_2, ... d_S]$, where $w_s$ and $d_s$ represent the width and depth of the network structure at the $s$-th stage, respectively, $1 \leq s \leq S$, and S represents the total number of stages of the network structure. Thus, according to an embodiment of the present disclosure, the network structure represented by the vector v can be updated by updating the vector $v$.

It will be appreciated by those skilled in the art that the network structure characterizing the neural network is not limited to those defined by an encoding manner such as a matrix based on the network topology, or a vector based on the network size described above as an example. Given the teachings and concepts of the present disclosure, one of ordinary skill in the art may devise other encoding solutions to define the network structure characterizing the neural network, and all such variations are intended to be within the scope of the present disclosure.

Next, according to an embodiment of the present disclosure, in step S110 of the method 100, a plurality of neural networks are trained for a plurality of performance parameters to obtain a plurality of parameter values for each performance parameter.

A plurality of network structures characterizing the plurality of neural networks may be selected (e.g., sampled) from the set of network structures determined in step S105 and trained to obtain a plurality of parameter values for a plurality of performance parameters. The parameter values may be divided into a plurality of groups, where each group may include a number of parameter values, and one performance parameter corresponding to one group of parameter values. In other words, for each trained neural network, it can generate one parameter value for each performance parameter. For any of the plurality of performance parameters, a group of parameter values is obtained by training the plurality of network structures, where the number of parameter values in the group is the same as the number of trained neural networks. Since the training of the neural networks is known to those skilled in the art, the details of which are not described in greater detail herein for the sake of brevity.

According to an embodiment of the present disclosure, the plurality of performance parameters may include at least two of an accuracy, a number of parameters, an amount of delay at run-time, and an amount of computation required at run-time (e.g., a number of floating-point operations) of the neural network for a particular target task.

According to an embodiment of the present disclosure, examples of the particular target task may be data classification (e.g., image analysis), semantic segmentation, target detection, etc.

For example, in the case where the particular target task is target detection, the parameter value of a first performance parameter may be the accuracy for target detection of a corresponding trained neural network, a second performance parameter may be the number of parameters, such as weights, of the corresponding trained neural network, a third performance parameter may be the amount of delay at run-time when the corresponding trained neural network performs target detection, and a fourth performance parameter may be the amount of computation required which the corresponding trained neural network performs target detection. It will be understood by those skilled in the art that there may be more or fewer performance parameters, not limited to four.

According to an embodiment of the present disclosure, in step S 110, it is assumed that L network structures (represented by grey boxes in FIG. 2) are selected from the set of network structures, where L is a natural number greater than 2. For example, neural networks characterized by the L network structures are trained for four performance parameters, such that for each performance parameter, $L$ parameter values can be obtained, that is, a total of four groups of parameter values can be obtained, each group including $L$ parameter values regarding one performance parameter.

According to an embodiment of the present disclosure, through the operation performed in step S 110 above, for each network structure selected from the set of network structures, parameter values of a plurality of performance parameters corresponding to the network structure may be obtained such that the network structure and the parameter values of the corresponding performance parameters constitute data pairs. For example, it is assumed that neural networks characterized by the selected network structures are trained for four performance parameters, a plurality of data pairs, such as a first data pair ($a_i$ (or $v_i$), $P_{i1}$), a second data pair ($a_i$ (or $v_i$), $P_{i2}$), a third data pair ($a_i$ (or $v_i$), $P_{i3}$), and a fourth data pair ($a_i$ (or $v_i$), $P_{i4}$), can be obtained by training a selected *i-th* ($1 \leq i \leq L$) network structure, where Pii represents the parameter value of the first performance parameter, $P_{i2}$ represents the parameter value of the second performance parameter, $P_{i3}$ denotes the parameter value of the third performance parameter, and $P_{i4}$ denotes the parameter value of the fourth performance parameter. In this way, four groups of data pairs can be obtained, the first group including $L$ first data pairs, the second group including $L$ second data pairs, the third set including $L$ third data pairs, and the fourth group including $L$ fourth data pairs.

Next, according to an embodiment of the present disclosure, in step S120 of the method 100, a plurality of neural network predictors are trained based on the plurality of neural networks and the plurality of parameter values, where each neural network predictor is used for predicting one performance parameter for the neural networks. For example, a plurality of network structures corresponding to the plurality of neural networks and a corresponding plurality of groups of parameter values may be provided to the plurality of neural network predictors to train the neural network predictors. Each neural network predictor corresponds to one performance parameter, such that a group of parameter values obtained for a particular performance parameter is used to train one neural network predictor to which the performance parameter corresponds.

According to an embodiment of the present disclosure, the number of neural network predictors trained in step S120 corresponds to the number of performance parameters. For example, if in step S110 parameter values are obtained only for two performance parameters, that is, two groups of parameter values are obtained, the number of neural network predictors trained in step S120 is also two. If parameter values are obtained for four performance parameters in step S110, that is, four groups of parameter values are obtained, and the number of neural network predictors trained in step S120 is four.

Note that each neural network predictor corresponds to one performance parameter, and different neural network predictors correspond to different performance parameters. Thus, each neural network predictor is used to predict a parameter value of one performance parameter for the neural network, and different neural network predictors are used to predict parameter values of different performance parameters for the neural network. As described above, it is assumed that, in step 110, $L$ network structures are selected from the set of network structures defined in step S105, the neural networks characterized by the $L$ network structures are trained for four performance parameters, and four groups of data pairs are obtained; the four groups of data pairs are respectively used for training a corresponding first neural network predictor, a second neural network predictor, a third neural network predictor, and a fourth neural network predictor.

According to an embodiment of the present disclosure, a neural network predictor may be trained through a regression analysis method using Huber loss. Since the regression analysis method using Huber losses is known to those skilled in the art, the details thereof are not described in more detail herein for the sake of brevity. Moreover, those skilled in the art will recognize that while embodiments of the present disclosure are described above by taking an example of the regression analysis method using Huber loss, the present disclosure is not so limited. In light of the teachings and concepts of the present disclosure, one of ordinary skill in the art can devise other methods to train corresponding neural network predictors based on data pairs, and all such variations are intended to be within the scope of the present disclosure.

According to an embodiment of the present disclosure, the neural network predictor trained in step S 120 may be used to predict a performance parameter of the neural network. In other words, the trained neural network predictor may predict the performance parameters of each network structure in the set of network structures defined in step S 105. Specifically, for example, if the first neural network predictor is trained using $L$ network structures selected from the set of network structures and a group of parameter values of the corresponding first performance parameter (e.g., the first data pair ($a_i$ (or $v_i$), $P_{i1}$) described above), then the first neural network predictor may be used to predict the first performance parameters of other network structures than the $L$ network structures in the set of network structures. In fact, the neural network predictor can learn the law concerning different samples (network structures) through the training, and then can cause the network structures to update, so as to obtain network structures with higher prediction performance. In other embodiments, the trained neural network predictor may predict the performance parameter not only of each network structure in the set of network structures defined in step S 105, but also of other network structures associated with the network structures in the set of network structures (e.g., network structures generated through multiple iterations using the trained neural network predictors, described below, which may include network structures associated with, but not belonging to, the network structures in the set of network structures).

Furthermore, according to an embodiment of the present disclosure, the plurality of neural network predictors trained in step S 120 may include a main predictor and at least one auxiliary predictor. According to an embodiment of the present disclosure, the selection of the main predictor or auxiliary predictors may be determined according to the particular target task. For example, for a particular task target that is accuracy sensitive, the main predictor may be a predictor that predicts the performance parameter of accuracy for a neural network; the auxiliary predictor may be a predictor that predicts other performance parameters for the neural network, such as the number of parameters, the amount of delay at run-time, or the amount of computation required at run-time. According to an embodiment of the present disclosure, the main predictor may play a dominant role in determining the final network structure (i.e., a target neural network), while the auxiliary predictor may play a subordinate role in determining the final network structure. This will be described in further detail below.

Next, according to an embodiment of the present disclosure, in step S130 of the method 100, a target neural network is determined using a trained plurality of neural network predictors.

Specifically, according to an embodiment of the present disclosure, in step S130, the target neural network may be determined using the trained plurality of neural network predictors, including the main predictor and the auxiliary predictor. As shown in FIG. 1A, step S130 may include sub-step S131 and sub-step S132.

In sub-step S131, multiple iterations are performed using the trained neural network predictors, where the number of iterations may be determined empirically. In each iteration, the trained plurality of neural network predictors are used to determine a plurality of gradient structures respectively corresponding to the plurality of neural network predictors based on the network structure obtained in a previous iteration, and a network structure for this iteration is obtained based on the network structure obtained in the previous iteration and the plurality of gradient structures.

According to an embodiment of the present disclosure, in each iteration, different weights are assigned to the gradient structures corresponding to the main predictor and the auxiliary predictor, respectively. In other words, the weights reflect the different roles that the main predictor and the auxiliary predictor play in determining the final network structure (i.e., the target neural network). For example, according to an embodiment of the present disclosure, in each iteration, a relatively large weight may be assigned to the gradient structure corresponding to the main predictor and a relatively small weight may be assigned to the gradient structure corresponding to the auxiliary predictor, that is, the weight assigned to the gradient structure corresponding to the auxiliary predictor is smaller than the weight assigned to the gradient structure corresponding to the main predictor.

Specifically, according to an embodiment of the present disclosure, the above iterations may be represented by Equation (1) below:

$$a^{t+1} = \mathrm{P}_\Omega(\alpha^t + \eta * (\frac{\partial \mathcal{P}_m(a^t)}{\partial \alpha^t} - w \frac{\partial \mathcal{P}_{aux}(a^t)}{\partial \alpha^t})) \qquad \text{Equation (1)}$$

In Equation (1), $a$ represents a network structure encoded as a matrix. In other embodiments of the present disclosure, the encoded matrix $a$ of a network structure in Equation (1) may be replaced with an encoded vector v of a network structure. In Equation (1), $a^{t+1}$ represents the network structure for this iteration, and $a^t$ represents the network structure obtained in the previous iteration. Furthermore, in Equation (1), $\mathrm{P}_\Omega$ is a function of projecting a network structure in an encoded form back into the search space (i.e., the set of network structures determined in step S105), $\eta$ is a learning rate, $\mathcal{P}_m$ represents the main predictor, and $\mathcal{P}_{aux}$ represents the auxiliary predictor. In addition, $\frac{\partial \mathcal{P}_m(a^t)}{\partial \alpha^t}$ represents a gradient structure corresponding to the main predictor, $\frac{\partial \mathcal{P}_{aux}(a^t)}{\partial \alpha^t}$ represents a gradient structure corresponding to the auxiliary predictor, and w represents a weight corresponding to the auxiliary predictor (or a weight of the gradient structure corresponding to the auxiliary predictor) and may have any value selected empirically. The value of $w$ may be determined empirically, for example, according to the desired number of parameters or throughput of the neural network (e.g., the neural network corresponding to the network structure identified after searching). Note that in Equation (1), the weight corresponding to the main predictor (or the weight of the gradient structure corresponding to the main predictor) is 1, and those skilled in the art can understand that the weight corresponding to the main predictor may also be any value selected empirically.

Those skilled in the art will recognize that although Equation (1) includes only one gradient structure corresponding to an auxiliary predictor, the present disclosure is not so limited. According to the teachings and concepts of the present disclosure, Equation (1) may also include a plurality of gradient structures corresponding to auxiliary predictors, where the number of the gradient structures corresponds to the number of the auxiliary predictors, and each of the plurality of gradient structures corresponding to the auxiliary predictors has a corresponding weight. According to an embodiment of the present disclosure, the value of the weight of the gradient structure corresponding to the auxiliary predictor may be determined according to the particular target task.

According to an embodiment of the present disclosure, searching under constraints for a network structure is achieved by adding gradient structure terms corresponding to a plurality of neural network predictors into Equation (1). In other words, by converting the constraint into the gradient structure term corresponding to the auxiliary predictor, the efficiency of searching can be improved while satisfying the preset constraint.

According to an embodiment of the present disclosure, in a first iteration, a network structure, which may be denoted as $a^0$, may be randomly selected (e.g. sampled) from the set of network structures, i.e., the search space, as an initial point for the iteration. Subsequently, the network structure is updated using Equation (1).

According to an embodiment of the present disclosure, as shown in Equation (1), the step of obtaining the network structure $a^{t+1}$ for this iteration based on the network structure $a^t$ obtained in the previous iteration and the gradient structures such as $\dfrac{\partial P_m(a^t)}{\partial \alpha^t}$ and $\dfrac{\partial P_{aux}(a^t)}{\partial \alpha^t}$ may include: modifying the network structure $a^t$ obtained in the previous iteration using the gradient structures such as $\dfrac{\partial P_m(a^t)}{\partial \alpha^t}$ and $\dfrac{\partial P_{aux}(a^t)}{\partial \alpha^t}$; determining whether the modified network structure, for example,

$$\alpha^t + \eta * \left(\frac{\partial \mathcal{P}_m(a^t)}{\partial \alpha^t} - w\frac{\partial \mathcal{P}_{aux}(a^t)}{\partial \alpha^t}\right)$$

, belongs to the set of network structures; and in response to the modified network structure not belonging to the set of network structures, projecting the modified network structure to the set of network structures to obtain the network structure $a^{t+1}$ for this iteration. In this regard, it will be appreciated by those skilled in the art that the function $P_\Omega$ serves to avoid a situation that the modified network structure is beyond the set of network structures (i.e., the search space). According to an embodiment of the present disclosure, the function $P_\Omega$ may be, for example, the argmax function.

Specifically, according to an embodiment of the present disclosure, when the modified network structure is beyond the set of network structures, a network structure from the set of network structures which is closest to the modified network structure, for example, $\alpha^t + \eta * \left(\frac{\partial \mathcal{P}_m(a^t)}{\partial \alpha^t} - w\frac{\partial \mathcal{P}_{aux}(a^t)}{\partial \alpha^t}\right)$, may be determined as the network structure $a^{t+1}$ for this iteration. For example, a network structure from the set of network structures, i.e., the search space, which has the shortest distance from the modified network structure may be determined as the network structure $a^{t+1}$ for this iteration, and the distance may be, for example, a Euclidean distance. In some embodiments, if the modified network structure is beyond the set of network structures, the modified network structure may be subjected to a rounding operation to obtain a corresponding network structure in the set of network structures. In some embodiments, the modified network structure is still determined as the network structure for this iteration if the distance from the modified network structure to the set of network structures is within a preset threshold range, although the modified network structure is beyond the set of network structures, which is particularly applicable where the number of network structures in the set of network structures is small.

In sub-step S132, the target neural network is determined. In this step, a network structure characterizing the target neural network may be selected according to a predetermined rule from the network structures obtained in the multiple iterations in sub-step S131.

According to an embodiment of the present disclosure, the neural networks characterized by the network structures obtained through multiple iterations can be trained for a performance parameter corresponding to the main predictor (namely, a performance parameter predicted by the main predictor), and then parameter values corresponding to each network structure are obtained; a network structure is selected according to the parameter value (for example, a network structure corresponding to a maximum parameter value is selected), and the neural network characterized by the network structure is taken as the target neural network. For example, the network structure obtained in each iteration described above may be determined as a candidate target network structure. That is to say, $J$ candidate target network structures can be obtained in $J$ iterations (the J candidate target network structures can constitute a set of candidate target network structures). According to an embodiment of the present disclosure, the neural networks characterized by the $J$ candidate target network structures can be trained, and an optimal candidate target network structure is determined as the network structure characterizing the target neural network based on a comparison of parameter values of a performance parameter (e.g., the performance parameter corresponding to the main predictor, such as accuracy) of the trained $J$ neural networks.

According to the technique for generating a neural network of the present disclosure, automatic searching for a network structure satisfying a preset constraint can be achieved for different tasks in a search space of network structures while consuming fewer computational resources. Specifically, according to the technique for generating a neural network herein, efficient searching for a network structure is achieved without training a large number of samples by introducing a search strategy of gradient updates. For example, according to the technique for generating a neural network herein, a neural network structure with good performance that meets the constraint can be found using only a few tens of samples, enabling cost-effective automatic searching for a network structure regardless of the artificial design of the neural network.

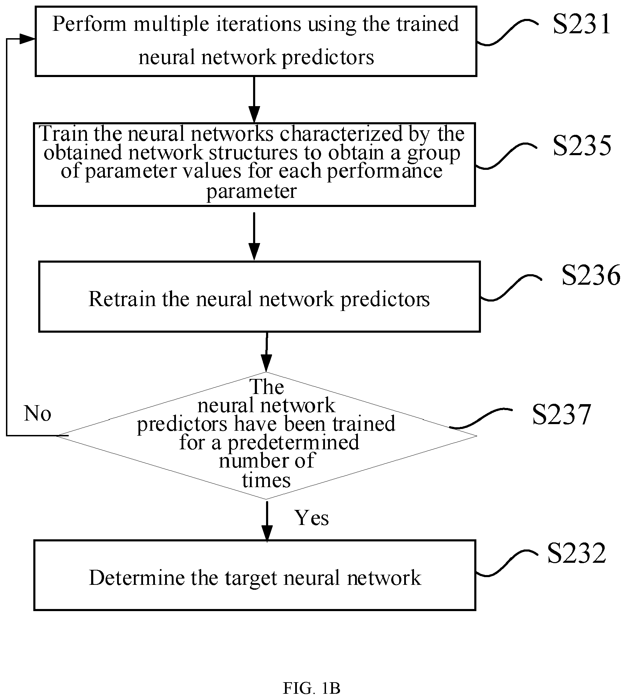

FIG. 1B shows another implementation of step 130 of FIG. 1A. As shown in FIG. 1B, in another implementation of step 130, multiple iterations are performed first to train the neural network predictors (including sub-steps S231, S235, S236, and S237 shown in FIG. 1B), and then the target neural network is determined (including sub-step S232 shown in FIG. 1B).

In sub-step S231, a group of network structures is obtained using the trained neural network predictors. In this step, to obtain the group of network structures, multiple iterations are performed using the trained neural network predictors, where the number of iterations can be determined empirically. This step is the same as step S131 of FIG. 1, and therefore, a detailed description of step S231 will not be given below. In sub-step 235, the neural network characterized by at least one network structure of the group of network structures obtained in sub-step S231 is trained for a plurality of performance parameters to obtain a group of trained neural networks, and a group of parameter values is obtained for each performance parameter. This sub-step 235 is different from step S 110 of FIG. 1 in that a neural network characterized by a network structure obtained using the neural network predictors is trained in the sub-step 235, and a neural network characterized by a network structure selected from the set of network structures is trained in step S 110; in other aspects, sub-step S235 is the same as step S110 of FIG. 1, and therefore the sub-step S235 will not be described in detail below.

In sub-step S236, the neural network predictors are retrained. This step is similar to step S120 of FIG. 1, and will not be described in detail below, with emphasis only on the difference thereof from step S120.

In an embodiment, the neural network predictors are trained based on the network structures obtained in sub-step S231 and the parameter values obtained in sub-step S235. In another embodiment, the neural network predictors are trained based on the network structures selected from the set of network structures in step 110 and the corresponding parameter values obtained in step 110, in addition to the network structures obtained in sub-step S231 and the corresponding parameter values obtained in sub-step S235.

In sub-step S237, a determination is made as to whether the neural network predictors have been retrained for a predetermined number of times, where the predetermined number of times may be determined empirically and may be any integer greater than or equal to 1. A counter may be provided in some embodiments to count the number of times the neural network predictors are retrained. An initial value of the counter is 0, and upon each iteration through sub-step S236, the value of the counter is incremented by 1.

If in sub-step S237, a determination is made that the neural network predictors have been retrained for the predetermined number of times, the method proceeds to sub-step S232 to determine the target neural network. Sub-step S232 is the same as sub-step S132 of FIG. 1, in both of which a network structure characterizing the target neural network is selected according to the predetermined rule from the network structures obtained in multiple iterations of the preceding steps, i.e., from sub-step S131 and sub-step S231, respectively. Therefore, sub-step S232 will not be described in detail below.

If a determination is made in sub-step 237 that the neural network predictors have not been retrained for the predetermined number of times, the method returns to sub-step 231 to begin the next iteration for training the neural network predictors.

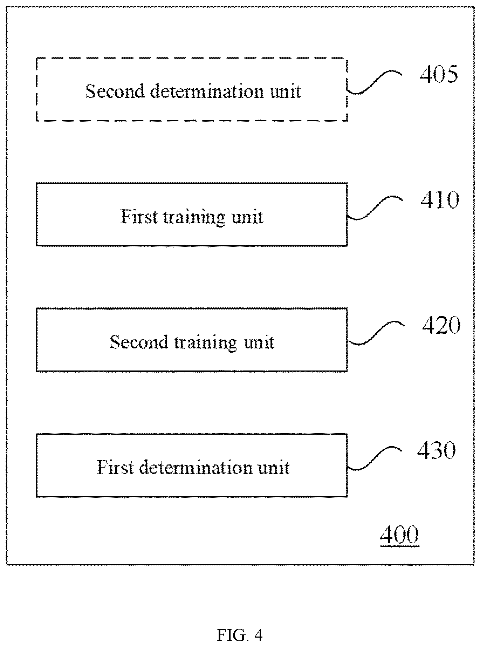

Furthermore, the present disclosure provides an apparatus 400 for generating a neural network. FIG. 4 is a block diagram illustrating the apparatus 400 for generating a neural network according to an embodiment of the present disclosure.

As shown in FIG. 4, the apparatus 400 for generating a neural network according to an embodiment of the present disclosure may include: a first training unit 410 configured to train a plurality of neural networks for a plurality of performance parameters to obtain a plurality of parameter values for each performance parameter; a second training unit 420 configured to train a plurality of neural network predictors based on the parameter values and the neural networks; and a first determination unit 430 configured to determine a target neural network using trained neural network predictors.

Furthermore, according to an embodiment of the present disclosure, the apparatus 400 may optionally include a second determination unit 405, as indicated by a dashed box, configured to determine a set of network structures.

According to an embodiment of the present disclosure, the second determination unit 405, the first training unit 410, the second training unit 420, and the first determination unit 430 included in the apparatus 400 above may respectively perform the operations in steps S105, S110, S120, and S130 included in the method 100 for generating a neural network described above with reference to FIGs. 1 to 3, and thus will not be described in detail herein.

According to the technique for generating a neural network of the present disclosure, automatic searching for a network structure satisfying a preset constraint can be achieved for different tasks in a huge search space of network structures while consuming fewer computational resources. Specifically, according to the technique for generating a neural network herein, efficient searching for a network structure is achieved without training a large number of samples by introducing a search strategy of gradient updates. For example, according to the technique for generating a neural network herein, a neural network structure with good performance that meets the constraint can be found using only a few tens of samples, enabling cost-effective automatic searching for a network structure regardless of the artificial design of the neural network.

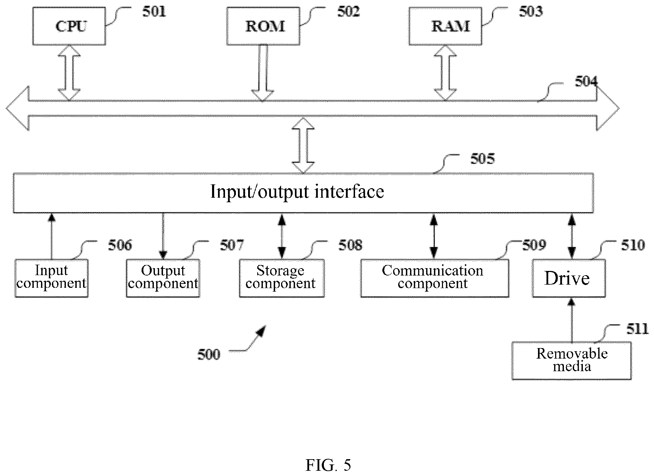

FIG. 5 is a block diagram illustrating a general-purpose machine 500 that may be used to implement the method 100 and the apparatus 400 for generating a neural network according to embodiments of the present disclosure. The general-purpose machine 500 may be, for example, a computer system or computing device. It should be noted that general-purpose machine 500 is only one example and does not imply any limitation as to the scope of use or functionality of the disclosed method and apparatus. Nor should the general-purpose machine 500 be interpreted as having any dependency or requirement relating to any one or combination of components illustrated in the method or apparatus described above.

In FIG. 5, a central processing unit (CPU) 501 performs various processes according to a program stored in a read-only memory (ROM) 502 or a program loaded from a storage component 508 to a random-access memory (RAM) 503. In the RAM 503, data required when the CPU 501 performs various processes, among others, is also stored as needed. The CPU 501, the ROM 502, and the RAM 503 are coupled with each other via a bus 504. An input/output interface 505 is also coupled to the bus 504.

The following components are also connected to the input/output interface 505: an input component 506 (including a keyboard, a mouse, etc.), an output component 507 (including a display such as a CRT and an LCD, and a speaker, etc.), a storage component 508 (including a hard disk, etc.), and a communication component 509 (including a network interface card such as a LAN card, and a modem, etc.). The communication component 509 performs communication processing via a network such as the Internet. A drive 510 may also be connected to the input/output interface 505 as desired. A removable medium 511 such as a magnetic disk, optical disk, magneto-optical disk, and semiconductor memory may be installed on the drive 510 as desired so that a computer program read therefrom may be installed in the storage component 508 as desired.

In the case where the series of processes are implemented by software, the program constituting the software may be installed from a network such as the Internet or a storage medium such as the removable medium 511.

It will be understood by those skilled in the art that such a storage medium is not limited to the removable medium 511 shown in FIG. 5, which stores programs therein and is distributed separately from a device to provide a user with the program. Examples of the removable medium 511 include a magnetic disk (including a floppy disk), an optical disk (including a CD-ROM and a DVD), a magneto-optical disk (including a mini disk (MD) (registered trademark)), and a semiconductor memory. Alternatively, the storage medium may be the ROM 502, a hard disk contained in the storage component 508, etc., which stores programs therein and is distributed to users together with a device containing the same.

Furthermore, the present disclosure provides a program product storing machine-readable instruction code. The instruction code, when read and executed by a machine, may perform the data processing method and the method for generating a neural network according to the present disclosure described above. Accordingly, the various storage media listed above for carrying such a program product are also included within the scope of the present disclosure.

The technique for generating a neural network according to the present disclosure may be applied to any technical field of information or data processing using neural networks. For example, according to an embodiment of the present disclosure, data processing (e.g., image processing) may be performed using the target neural network determined by the method and apparatus for generating a neural network described above to enable, for example, data classification (e.g., image classification), semantic segmentation, and/or object detection.

For example, according to an embodiment of the present disclosure, in the apparatus 400 for generating a neural network, the first training unit 410 may train a plurality of neural networks using labeled image data to obtain a plurality of parameter values for a plurality of performance parameters of the plurality of neural networks. The second training unit 420 may train a plurality of neural network predictors configured to predict performance parameters of the neural networks based on the plurality of neural networks and the plurality of parameter values, the plurality of neural network predictors including a main predictor and auxiliary predictors. The determination unit 430 may determine the target neural network using the trained plurality of neural network predictors. The target neural network as determined may be used to perform image classification, semantic segmentation and/or target detection.

The foregoing detailed description has described the implementations of the apparatus and/or method according to embodiments of the present disclosure through block diagrams, flowcharts, and/or embodiments. When such block diagrams, flowcharts, and/or embodiments include one or more functions and/or operations, those skilled in the art will appreciate that each function and/or operation in such block diagrams, flowcharts, and/or embodiments may be implemented individually and/or collectively by various hardware, software, firmware, or virtually any combination thereof. In one embodiment, portions of the subject matter described in this specification may be implemented in the form of an application-specific integrated circuit (ASIC), field programmable gate array (FPGA), digital signal processor (DSP), or other integrated forms. However, those skilled in the art will recognize that some aspects of the embodiments described in this specification can be equivalently implemented, in whole or in part, in the form of one or more computer programs running on one or more computers (e.g., in the form of one or more computer programs running on one or more computer systems), in the form of one or more programs running on one or more processors (e.g., in the form of one or more programs running on one or more microprocessors), in the form of firmware, or substantially any combination thereof. Moreover, it is well within the ability of those skilled in the art, given this disclosure, to design circuitry and/or write code for the software and/or firmware of the present disclosure.

Although the present disclosure is described above through the detailed description of embodiments thereof, it should be understood that various modifications, improvements, or equivalents thereof may be devised by those skilled in the art within the scope of the appended claims. Such modifications, improvements, or equivalents shall also be considered to be within the scope of this disclosure.

## Claims

1.  A method for generating a neural network, comprising:

    training a plurality of neural networks for a plurality of performance parameters to obtain a plurality of parameter values for each of the plurality of performance parameters;
    training a plurality of neural network predictors based on the parameter values and the neural networks; and
    determining a target neural network using the trained neural network predictors.

2.  The method according to claim 1, wherein the neural network predictors comprise a main predictor and an auxiliary predictor for predicting different ones of the plurality of performance parameters for the neural networks, respectively.

3.  The method according to claim 1 or 2, further comprising:

    determining a set of network structures, each network structure in the set of network structures characterizing a neural network,
    wherein training the plurality of neural networks comprises:
    selecting a plurality of network structures characterizing the plurality of neural networks from the set of network structures.

4.  The method according to claim 3, wherein the set of network structures comprises a network structure represented by a directed acyclic graph,

    wherein each node of the directed acyclic graph represents an operation,
    wherein each edge of the directed acyclic graph represents a connection relationship between two corresponding nodes of the directed acyclic graph.

5.  The method according to claim 3 or 4, wherein determining the target neural network using the trained neural network predictors comprises:
    performing multiple iterations using the trained neural network predictors to obtain a group of network structures, comprising, for each iteration:

    determining a plurality of gradient structures based on the network structure obtained in a previous iteration using the trained neural network predictors, and
    obtaining a network structure for the iteration based on a network structure obtained in the previous iteration and the gradient structures.

6.  The method according to claim 5, wherein determining the target neural network using the trained neural network predictors further comprises:
    selecting a network structure characterizing the target neural network from the group of network structures according to a predetermined rule.

7. The method according to claim 3 or 4, wherein determining the target neural network using the trained neural network predictors comprises:
performing multiple iterations to iteratively train the neural network predictors, comprising, for each iteration:

obtaining a group of network structures using the trained neural network predictors;
training a neural network **characterized by** at least one network structure of the group of network structures for the plurality of performance parameters to obtain a group of parameter values for each of the plurality of performance parameters; and
training the neural network predictors based on at least the group of parameter values and the group of network structures.

8. The method according to claim 7, wherein obtaining the group of network structures using the trained neural network predictors comprises:

performing multiple iterations using the trained neural network predictors to obtain the group of network structures, comprising, for each iteration,
determining a plurality of gradient structures based on the network structure obtained in a previous iteration using the trained neural network predictors, and
obtaining a network structure for the iteration based on a network structure obtained in the previous iteration and the gradient structures.

9. The method according to claim 8, wherein determining the target neural network using the trained neural network predictors further comprises:
selecting a network structure characterizing the target neural network from the group of network structures obtained in a last iteration for iteratively training the neural network predictors according to a predetermined rule.

10. The method according to any one of claims5-6 and 8-9, wherein obtaining the network structure for the iteration based on the network structure obtained in the previous iteration and the gradient structures comprises:
assigning different weights to the gradient structures corresponding to different neural network predictors.

11. The method according to any one of claims 5-6 and 8-9, wherein obtaining the network structure for the iteration based on the network structure obtained in the previous iteration and the gradient structures comprises:

modifying the network structure obtained in the previous iteration using the gradient structures;
determining whether the modified network structure belongs to the set of network structures; and
projecting the modified network structure to the set of network structures to obtain the network structure for the iteration in response to the modified network structure not belonging to the set of network structures.

12. The method according to claim 11, wherein projecting the modified network structure to the set of network structures to obtain the network structure for the iteration in response to the modified network structure not belonging to the set of network structures comprises:
determining a network structure closest to the modified network structure from the set of network structures as the network structure for the iteration.

13. A computer-readable storage medium storing instructions, which when executed by a processor of a computing device, cause the computing device to perform the method according to any one of claims 1 to 12.

14. An electronic device, comprising:

a processor; and
a memory storing instructions" which when executed by the processor, cause the processor to perform the method according to any one of claims 1 to 12.

15. A data processing method, comprising:

receiving data; and

processing the data using the target neural network determined according to the method of any one of claims 1 to 12 to achieve at least one of data classification, semantic segmentation, and target detection.

<u>100</u>

Determine a set of network structures, where each network structure in the set of network structures characterizes a neural network ⟶ S105

Train a plurality of neural networks for a plurality of performance parameters to obtain a plurality of parameter values for each performance parameter ⟶ S110

Train a plurality of neural network predictors based on the parameter values and the neural networks ⟶ S120

Determine a target neural network using trained neural network predictors ⟶ S130

Perform multiple iterations using the trained neural network predictors ⟶ S131

Determine the target neural network ⟶ S132

FIG. 1A

Perform multiple iterations using the trained neural network predictors — S231

Train the neural networks characterized by the obtained network structures to obtain a group of parameter values for each performance parameter — S235

Retrain the neural network predictors — S236

The neural network predictors have been trained for a predetermined number of times — S237

No

Yes

Determine the target neural network — S232

FIG. 1B

FIG. 2

[0,0,0,0,0,0,1]

[0,0,0,0,1,0,0]    [0,1,0,0,0,0,0]

[0,1,0,0,0,0,0]

[0,0,1,0,0,0,0]

[0,0,0,1,0,0,0]

[0,1,0,0,0,0,0]

[1,0,0,0,0,0,0]

Connection
matrix

[[0,1,1,1,0,0,0,0]
[0,0,0,0,1,1,0,0]
[0,0,0,0,0,0,1,0]
[0,0,0,0,0,0,0,1]
[0,0,0,0,0,0,1,0]
[0,1,0,0,0,0,0,1]
[0,0,0,0,0,1,0,1]
[0,0,0,0,0,0,0,0]]

Operation
matrix

[[1,0,0,0,0,0,0]
[0,1,0,0,0,0,0]
[0,0,1,0,0,0,0]
[0,0,0,0,0,1,0]
[0,1,0,0,0,0,0]
[0,0,0,0,1,0,0]
[0,0,0,1,0,0,0]
[0,0,0,0,0,0,1]]

FIG. 3

```
┌─────────────────────────────────────────────────┐
│                                                   │
│   ┌─────────────────────────────────┐             │
│   │                                  │     405    │
│   │    Second determination unit     ├──∿         │
│   │                                  │             │
│   └─────────────────────────────────┘             │
│                                                   │
│                                                   │
│   ┌─────────────────────────────────┐     410    │
│   │                                  ├──∿         │
│   │        First training unit       │             │
│   │                                  │             │
│   └─────────────────────────────────┘             │
│                                                   │
│                                                   │
│   ┌─────────────────────────────────┐     420    │
│   │                                  ├──∿         │
│   │       Second training unit       │             │
│   │                                  │             │
│   └─────────────────────────────────┘             │
│                                                   │
│                                                   │
│   ┌─────────────────────────────────┐     430    │
│   │                                  ├──∿         │
│   │      First determination unit    │             │
│   │                                  │             │
│   └─────────────────────────────────┘             │
│                                            400    │
└─────────────────────────────────────────────────┘
```

FIG. 4

FIG. 5

Europäisches
Patentamt

European
Patent Office

Office européen
des brevets

# EUROPEAN SEARCH REPORT

Application Number

EP 23 16 1861

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/175058 A1 (HUAWEI TECH CO LTD [CN]) 10 September 2021 (2021-09-10) * paragraphs [0002], [0008] – [0012], [0102], [0127] – [0129] * & US 2022/414426 A1 (ZHOU WEIMIN [CN] ET AL) 29 December 2022 (2022-12-29) * the whole document * ----- | 1-15 | INV. G06N3/045 G06N3/082 G06N3/09 G06N3/0985 |

TECHNICAL FIELDS
SEARCHED      (IPC)

G06N

The present search report has been drawn up for all claims

| Place of search | Date of completion of the search | Examiner |
|---|---|---|
| The Hague | 31 July 2023 | Manfrin, Max |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...............................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 16 1861

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2023

| Patent document cited in search report | | Publication date | Patent family member(s) | | Publication date |
|---|---|---|---|---|---|
| WO 2021175058 | A1 | 10-09-2021 | CN 113361680 | A | 07-09-2021 |
| | | | EP 4105835 | A1 | 21-12-2022 |
| | | | US 2022414426 | A1 | 29-12-2022 |
| | | | WO 2021175058 | A1 | 10-09-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210278192